(19) Europäisches Patentamt
European Patent Office
Office européen des brevets

(11) **EP 2 750 830 B1**

(12) **FASCICULE DE BREVET EUROPEEN**

(45) Date de publication et mention
de la délivrance du brevet:
**29.04.2015 Bulletin 2015/18**

(51) Int Cl.:
***B24B 13/06*** *(2006.01)*    ***G05B 19/416*** *(2006.01)*

(21) Numéro de dépôt: **12756784.0**

(22) Date de dépôt: **22.08.2012**

(86) Numéro de dépôt international:
**PCT/FR2012/051921**

(87) Numéro de publication internationale:
**WO 2013/030495 (07.03.2013 Gazette 2013/10)**

(54) **PROCEDE DE SURFAÇAGE D'UNE SURFACE D'UN VERRE DE LUNETTES**

VERFAHREN ZUM BESCHICHTEN DER OBERFLÄCHE EINES BRILLENGLASES

METHOD OF SURFACING A SURFACE OF A SPECTACLE LENS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.09.2011 FR 1157751**

(43) Date de publication de la demande:
**09.07.2014 Bulletin 2014/28**

(73) Titulaire: **Essilor International
(Compagnie Générale d'Optique)
94220 Charenton-le-Pont (FR)**

(72) Inventeur: **BULTEZ, Xavier
F-94220 Charenton-le-Pont (FR)**

(74) Mandataire: **Santarelli
49, avenue des Champs-Elysées
75008 Paris (FR)**

(56) Documents cités:
**EP-A1- 0 937 542          WO-A1-2011/083234
DE-A1-102007 040 395**

## Description

L'invention concerne un procédé de surfaçage, en particulier de polissage, d'une surface d'un verre de lunettes.

L'invention concerne également une unité de contrôle et de commande pourvue d'un système de traitement de données pour exécuter un programme d'ordinateur mettant en oeuvre un tel procédé de surfaçage ainsi qu'une machine de surfaçage comportant cette unité de contrôle et de commande.

L'invention concerne aussi une interface de communication client-serveur pour le transfert d'un programme d'ordinateur mettant en oeuvre un tel procédé de surfaçage vers un ordinateur distant et son exécution sur cet ordinateur, ou pour le transfert de données d'entrées et de sorties.

De manière générale, le temps de surfaçage d'une surface d'un verre de lunettes dépend de la machine utilisée, du matériau et de cette surface.

On entend par surfaçage aussi bien les opérations d'usinage par tournage telles que l'ébauche et/ou la finition que les opérations de polissage.

Lorsqu'il s'agit de polissage, le temps de polissage dépend en outre du nombre de balayages de l'outil de balayage sur la surface du verre de lunette, de la vitesse de balayage et de l'amplitude de balayage. Ces paramètres influent sur la qualité optique et sur l'état de surface (rugosité) désirés.

La vitesse de surfaçage n'est pas sans effet sur la conformité de la surface réalisée à la surface voulue. Ainsi une très faible vitesse peut permettre d'assurer la conformité d'une surface très complexe, toutefois, elle en affectera la productivité. Au contraire, une grande vitesse permet d'augmenter la productivité mais peut affecter la conformité.

En outre, la fonction optique d'un verre de lunettes est apportée principalement par deux dioptres correspondant aux surfaces avant et arrière du verre de lunettes. La topographie de la surface à réaliser dépend de la répartition de la fonction appliquée entre la surface avant et la surface arrière dudit verre. Dans certains cas, cette répartition est telle que la surface à réaliser est particulièrement complexe.

Généralement, des essais sont à mener pour les surfaces complexes afin de déterminer une vitesse de surfaçage optimale, ce qui nuit à la productivité.

On connaît de la demande internationale WO 2011/083234 un procédé d'usinage par tournage d'une surface de verre de lunette dans lequel la vitesse de rotation est fixe et déduite à partir d'une valeur représentative de la plus grande différence de valeurs géométriques de sphère moyenne sur la surface préalablement déterminée et d'une valeur géométrique de cylindre en un point prédéterminé de contrôle de la vision de loin.

L'invention vise à fournir un procédé de surfaçage permettant de tenir compte de surfaces encore plus complexes, par exemple ayant une composante prismatique et qui soit simple, commode et économique à mettre en oeuvre.

L'invention a ainsi pour objet, sous un premier aspect, un procédé de surfaçage d'une surface d'un verre de lunettes, comportant une étape de détermination d'une vitesse de rotation fixe dudit verre de lunettes à partir de caractéristiques géométriques de ladite surface, caractérisé en ce que l'étape de détermination de la vitesse de rotation comporte les étapes suivantes :

- générer à partir des caractéristiques géométriques de ladite surface un fichier de valeurs géométriques d'altitude de ladite surface, lequel fichier est centré sur une valeur géométrique d'altitude nulle en un point de référence prédéterminé ;
- déterminer une valeur représentative de la plus grande différence de valeurs géométriques d'altitude sur ladite surface ; et
- déduire la vitesse de rotation de ladite valeur de la plus grande différence de valeurs géométriques d'altitude sur ladite surface et d'une valeur géométrique de cylindre en un point prédéterminé de contrôle de la vision de loin.

Le procédé selon l'invention permet de déterminer simplement des paramètres de surfaçage adéquats permettant tout à la fois une bonne productivité et une bonne conformité de la surface réalisée à la surface voulue et ce quelque soit la complexité topographique, par exemple avec des composantes torique et prismatique cumulées.

La vitesse de rotation du verre qui est déterminée est une vitesse fixe en ce sens qu'une seule vitesse est déterminée. Cette vitesse est en fait une vitesse de seuil maximal pour mettre en oeuvre le procédé de surfaçage. Durant la mise en oeuvre du procédé de surfaçage du verre, la machine de surfaçage peut travailler avec un verre tournant à cette vitesse de seuil durant tout le cycle de surfaçage.

On observera que dans le présent document, l'expression « *valeur géométrique d'altitude* » Hk en un point d'une surface est déduite d'un fichier de surface centré sur un point d'altitude $Z_0$ représentative de l'intersection entre l'axe de rotation de la broche portant le verre et le point de référence de la surface.

A la différence du procédé décrit dans la demande internationale WO 2011/083234 qui ne prend en compte que les coordonnées surfaciques du verre (coordonnées x et y), le procédé selon l'invention tient compte de différences d'altitudes (coordonnées en z) qui correspondent aux accélérations d'une autre broche portant l'outil de surfaçage par rapport à la surface du verre.

On observera que les surfaces complexes de verre, appelées « free form surfaces » ou « digital surfacing » en anglais, présentent généralement de grandes variations d'altitudes, ce qui est particulièrement caractéristique de la difficulté de surfaçage, notamment sur une surface combinant un tore et une progression.

En outre, contrairement au procédé décrit ci-dessus qui ne prend pas en considération la position relative de l'outil de surfaçage par rapport à la surface du verre, la prise en compte des altitudes selon l'invention permet de s'affranchir de tout décentrement et/ou de rotation de la surface du verre puisque les valeurs géométriques d'altitudes sont prises en référence au fichier de coordonnées qui est lui-même centré sur un point d'altitude $Z_0$ représentatif de l'intersection entre l'axe de rotation de la broche portant le verre et le point de référence de la surface, avec l'axe qui passe par le point de référence prisme le cas échéant.

Quant à l'expression « *valeur géométrique de cylindre* » Cyl, elle est donnée par la relation suivante :

$$Cyl = l \times \left| \frac{1}{R1} - \frac{1}{R2} \right| \; ;$$

avec :

- l : une constante ;
- R1 : le rayon de courbure maximal de cette surface à ce point ;
- R2 : le rayon de courbure minimal de cette surface à ce point.

On observera que dans le cas où la constante l = n-1, avec n qui serait l'indice de réfraction du matériau du verre de lunettes, la valeur Cyl correspondrait à la définition optique du cylindre en un point d'une surface.

Ici, dans la mesure où l'on s'intéresse au surfaçage de la surface et donc à sa topographie, indépendamment de l'effet optique résultant de la valeur de l'indice de réfraction, l'on dispose, avec la valeur géométrique de cylindre, d'une valeur qui, tout en étant liée aux propriétés optiques de la surface, est indépendante de la matière du verre de lunettes et donc de l'indice réfraction du verre qui va être réellement fabriqué.

En effet, dans le procédé selon l'invention, l'on détermine la vitesse de rotation du verre indépendamment de la matière du verre.

Par commodité, il est possible de choisir, pour la constante l la valeur 0,53. La valeur géométrique de cylindre alors obtenue correspondrait à la valeur d'un verre de lunette ayant un indice de réfraction n de 1,53, ce qui est une valeur courante dans la pratique.

Le procédé selon l'invention permet de déterminer la vitesse de rotation du verre de façon particulièrement simple et commode, à partir de valeurs qu'il est possible d'obtenir par des outils de calcul standard en matière d'optique, ces outils de calculs permettant, à partir d'un fichier définissant la surface avec un nombre fini de points (il y a plus ou moins de points suivant le fichier machine) pour chacun desquels sont données ses coordonnées, par exemple dans un repère cartésien, l'altitude et la valeur de cylindre. Les outils de calcul peuvent donc, en fixant arbitrairement une valeur d'indice de réfraction, par exemple à la valeur 1,53 susmentionnée, être utilisés directement dans le procédé selon l'invention.

On observera que la plus grande différence de valeurs géométriques d'altitude est une mesure représentative du plus grand gradient d'altitude sur la surface à réaliser et qu'il s'agit donc d'une valeur parfaitement représentative de la difficulté qu'une surface présente à être réalisée.

La prise en compte de la valeur géométrique de cylindre au point de contrôle de la vision de loin permet de tenir compte de la composante torique (s'il y en a une) qui est une autre source de difficulté de surfaçage.

Ainsi, le procédé selon l'invention permet, par des calculs relativement simples, de déterminer la vitesse de rotation de seuil maximal du verre.

Bien entendu, c'est sur la base d'un étalonnage aisé à réaliser, par un nombre d'essais raisonnable, que sont fixées les règles de déduction de la vitesse de rotation du verre à partir de la valeur de la plus grande différence de valeurs géométriques d'altitude et de la valeur géométrique de cylindre au point de contrôle de la vision de loin.

Cet étalonnage peut en outre être exprimé sous la forme d'un tableau de correspondance relativement simple, ainsi qu'expliqué ci-après.

Selon des caractéristiques préférées, simples, commodes et économiques du procédé selon l'invention, l'étape de déterminer la valeur représentative de la plus grande différence de valeurs géométriques d'altitude comporte l'étape de traiter les valeurs géométriques d'altitude de ladite surface dudit fichier centré en prenant en compte des couples de points individuels de ladite surface, lesquels points individuels de chaque couple sont diagonalement opposés sur ladite surface, la diagonale passant audit point de référence prédéterminé, lesdits points individuels étant équidistants dudit point de référence prédéterminé.

La prise en compte de couples de points individuels diagonalement opposés sur la surface avec la diagonale qui passe par le point de référence prédéterminé et équidistants à ce point permet de caractériser les gradients d'altitude générés par la surface indépendamment de la composante torique. En outre, la prise en compte de tels couples de points individuels permet un échantillonnage particulièrement simple et commode de la surface du verre.

Selon d'autres caractéristiques préférées, simples, commodes et économiques du procédé selon l'invention :

- l'étape de déterminer la valeur représentative de la plus grande différence de valeurs géométriques d'altitude comporte l'étape de traiter les valeurs géométriques d'altitude de ladite surface dudit fichier centré en prenant en compte seulement une partie utile de la surface du verre dont on sait qu'elle contient le plus grand gradient d'altitude ;

- la partie utile de surface est située dans une zone annulaire intermédiaire, entre la périphérie et le centre de la surface ;
- la partie utile de surface présente un contour externe qui suit un contour monture dudit verre, lequel contour monture correspond au contour dudit verre obtenu après une opération de détourage ;
- ledit point de référence prédéterminé est représentatif du point de référence de prisme ;
- l'étape de déterminer la valeur de plus grande différence de valeurs géométriques d'altitude sur la dite surface comporte les étapes suivantes : déterminer des premières valeurs géométriques d'altitude sur ladite surface ; déterminer des deuxièmes valeurs géométriques d'altitude présentant un décalage angulaire prédéterminé par rapport auxdites premières valeurs géométriques d'altitude ; comparer lesdites premières valeurs géométriques d'altitude auxdites deuxièmes valeurs géométriques d'altitude décalées angulairement ; et déterminer la valeur de plus grande différence des valeurs géométriques d'altitude sur la dite surface ;
- il s'agit d'un procédé de polissage de ladite surface dudit verre de lunettes ;
- le procédé comporte l'une au moins des étapes supplémentaires suivantes : déduire une vitesse de balayage de la machine de polissage à partir de ladite valeur de la plus grande différence de valeurs géométriques d'altitude sur ladite surface, de ladite valeur géométrique de cylindre et de la matière dudit verre de lunettes ; déduire un nombre de balayages de l'outil de balayage de la machine de polissage à partir de ladite valeur de la plus grande différence de valeurs géométriques d'altitude sur ladite surface, de ladite valeur géométrique de cylindre et de la matière dudit verre de lunettes ; et déduire une amplitude de balayage de l'outil de balayage de la machine de polissage à partir de ladite valeur de la plus grande différence de valeurs géométriques d'altitude sur ladite surface, de ladite valeur géométrique de cylindre et de la matière dudit verre de lunettes ;
- l'étape de déterminer la vitesse de rotation du verre comporte les étapes suivantes : déduire un niveau de difficulté intrinsèque à ladite surface à partir de la valeur de la plus grande différence de valeurs géométriques d'altitude et de la valeur géométrique de cylindre ; et sélectionner la vitesse de rotation du verre à partir dudit niveau de difficulté et de paramètres propres à la machine de surfaçage utilisée ; et/ou
- ledit niveau de difficulté intrinsèque à la surface est choisi parmi plusieurs niveaux de difficulté intrinsèque prédéterminés en fonction de plages prédéterminées de valeurs géométriques de cylindre et de plages prédéterminées de valeurs de plus grande différence de valeurs géométriques d'altitude.

L'invention a aussi pour objet, sous un deuxième aspect, une unité de contrôle et de commande pourvue d'un microprocesseur configuré pour exécuter un programme d'ordinateur pour mettre en oeuvre le procédé décrit ci-dessus.

L'invention a encore pour objet, sous un troisième aspect, une machine de surfaçage pour réaliser une surface d'un verre de lunettes comportant l'unité de contrôle et de commande décrite ci-dessus.

L'invention a enfin pour objet, sous un quatrième aspect, une interface de communication client-serveur comportant des moyens adaptés à transférer la vitesse de rotation du verre déterminée par un programme d'ordinateur pour mettre en oeuvre le procédé tel que décrit ci-dessus, lorsque ce programme d'ordinateur est exécuté dans une unité de contrôle et de commande.

On va maintenant poursuivre l'exposé de l'invention par la description d'un exemple de réalisation, donnée ci-après à titre illustratif et non limitatif, en référence aux dessins annexés sur lesquels :

- la figure 1 représente schématiquement une machine de polissage « free form » mettant en oeuvre un procédé de polissage d'une surface d'un verre de lunettes ;
- la figure 2 illustre une table de correspondance (« look up table » en anglais), sous la forme graphique, de niveaux de difficulté de polissage prédéterminés ;
- la figure 3 est un schéma-blocs illustrant différentes étapes de fonctionnement du procédé ;
- la figure 4 illustre, schématiquement, la surface d'un verre de lunettes échantillonnée selon une étape du procédé ;
- la figure 5 représente, selon une matrice 2-2, les valeurs géométriques d'altitude sur la surface du verre et les échantillons visibles sur la figure 4 ;
- les figure 6 et 7 sont des schéma-blocs montrant respectivement l'étape de détermination de la valeur représentative de la plus grande différence de valeurs géométriques d'altitude sur la surface et les étapes pour construire la table de correspondance ; et
- la figure 8 montre, schématiquement, une interface de communication client-serveur comportant des moyens adaptés à transférer la vitesse de rotation déterminée par le procédé vers une unité de contrôle et de commande distante.

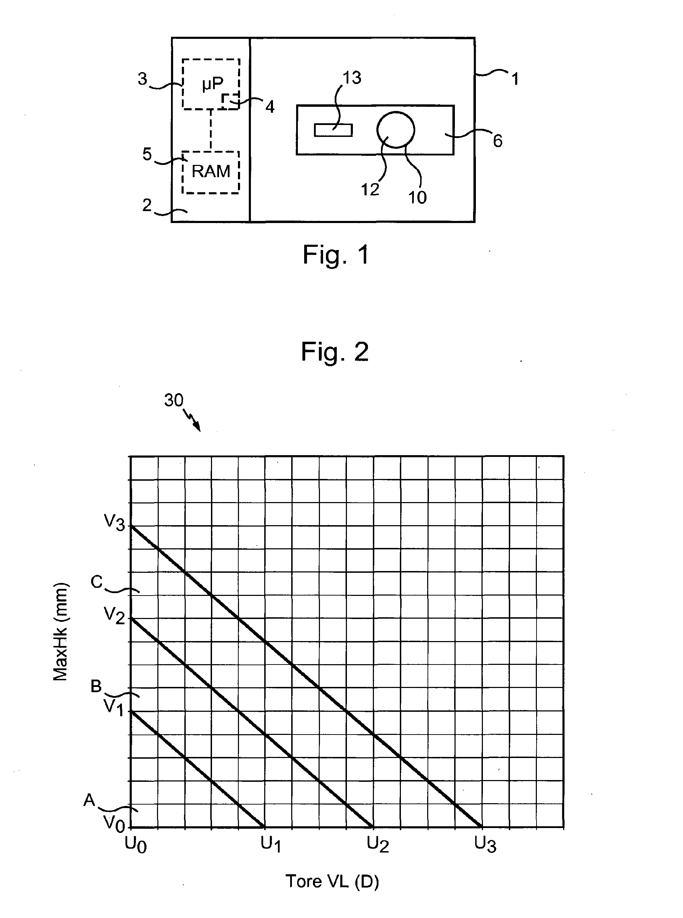

La figure 1 illustre une machine de polissage « free form » 1 à commande numérique, la commande numérique désignant l'ensemble des matériels et logiciels ayant pour fonction de donner des instructions de mouvements à tous les organes de la machine de polissage 1.

Cette machine 1 est adaptée à polir une surface 12 d'un verre 10 de lunettes, y compris une surface d'un verre progressif, possédant en outre des composantes torique et prismatique.

Pour cela, la machine 1 comporte une broche 13 portant un outil de polissage, dit outil de balayage (non représenté), ainsi qu'une unité de contrôle et de commande 2 pourvu d'un système de traitement de données comportant un microprocesseur 3 muni d'une mémoire 4, notamment non volatile, lui permettant de charger et stocker un logiciel, autrement dit un programme d'ordinateur, qui, lorsqu'il est exécuté dans le microprocesseur 3, permet la mise en oeuvre d'un procédé de polissage.

Cette mémoire non volatile 4 est par exemple de type ROM ("read only memory" en anglais).

L'unité 2 comporte en outre une mémoire 5, notamment volatile, permettant de mémoriser des données durant l'exécution du logiciel et la mise en oeuvre du procédé.

Cette mémoire volatile 5 est par exemple de type RAM ou EEPROM (respectivement "random access memory" et "electrically erasable programmable read only memory" en anglais).

La machine 1 comporte de plus une ouverture vitrée 6 adaptée à rendre visible la surface 12 du verre 10 sur laquelle agit la machine 1, lequel verre 10 est porté par une autre broche (non représentée).

Cette ouverture vitrée 6 permet, lors de la mise en oeuvre du procédé, à un utilisateur de cette machine 1 de surveiller le bon déroulement du procédé en visionnant le verre 10 dans la machine 1.

Pour polir le verre 10, on a besoin de connaître précisément certains paramètres de polissage, tels que la vitesse de rotation du verre Vrot, la vitesse de balayage Vbalay, le nombre de balayages Nbalay et l'amplitude de balayage Abalay de l'outil de balayage.

Ces paramètres Vrot, Vbalay, Nbalay et Abalay sont des consignes données à la machine 1.

Pour cela, le procédé selon l'invention comporte une étape de détermination de chacun de ces paramètres.

On va maintenant décrire en référence aux figures 2 à 7 les étapes de détermination de la vitesse de rotation du verre Vrot, de la vitesse de balayage Vbalay, du nombre de balayages Nbalay et de l'amplitude de balayage Abalay.

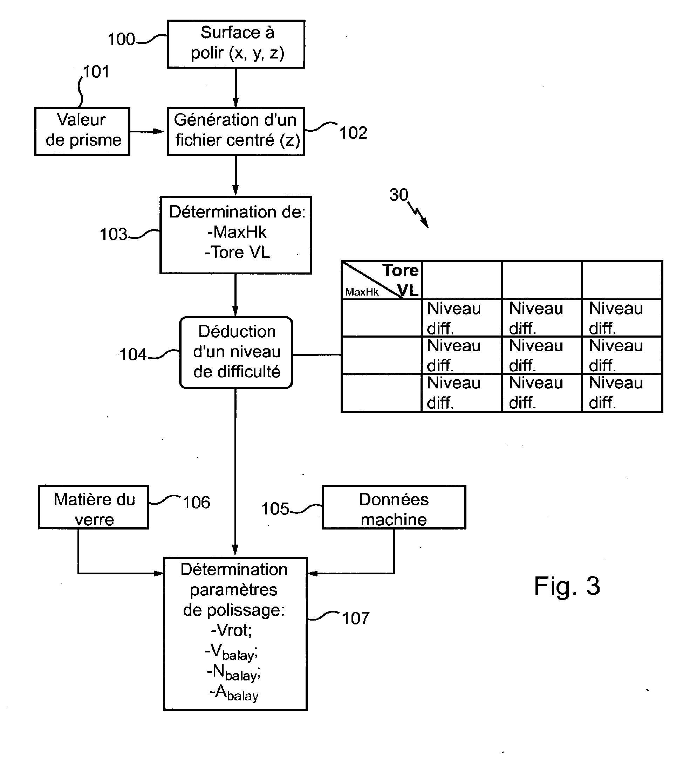

La figure 3 est un schéma-blocs des étapes permettant la détermination des paramètres ci-dessus Vrot, Vbalay, Nbalay et Abalay.

L'unité de contrôle et de commande 2 est configurée pour recevoir à l'étape 100 un fichier comportant des caractéristiques géométriques de la surface 12, sous la forme de coordonnées x, y, z, par exemple dans un repère cartésien, représentatives de ladite surface 12, en un nombre fini de points de celle-ci.

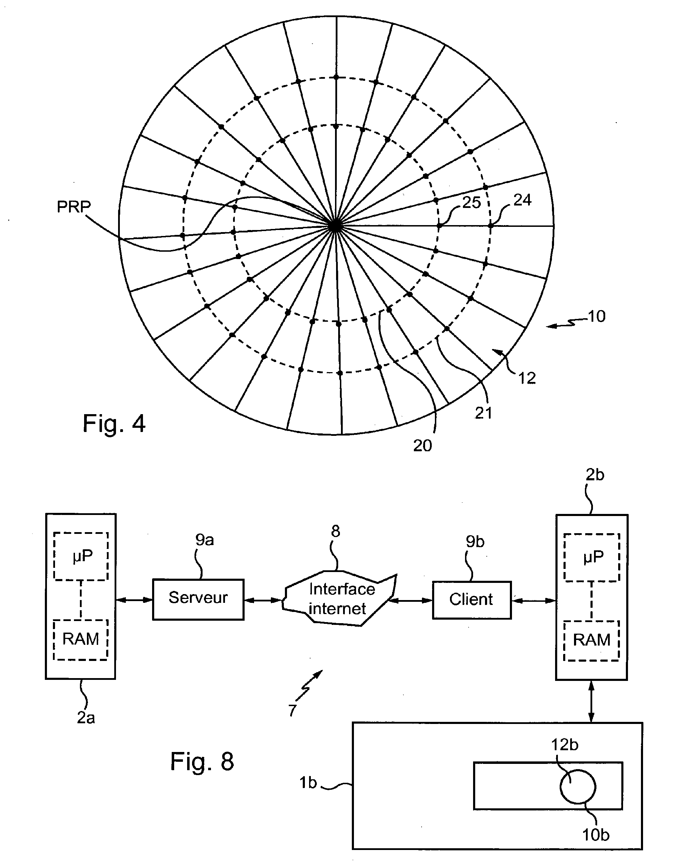

L'unité de contrôle et de commande 2 est en outre configurée pour recevoir à l'étape 101 une valeur de prisme (en dioptries prismatiques ou en degrés) puis traiter le fichier de surface et générer à l'étape 102, à partir de ce dernier et de cette valeur de prisme, un fichier centré de valeurs géométriques d'altitude (z) sur la surface 12, selon une matrice 2-2 (x, y), en prenant comme référence matricielle (x=0, y=0, z=0) le point d'intersection entre l'axe de rotation de la broche 13 de la machine 1 et la surface 12, l'axe passant par le point de référence prisme PRP (visible figure 4).

Le point de référence prisme PRP est l'endroit sur le verre où l'on doit contrôler le prisme prescription et/ou le prisme d'allègement, appelé aussi prisme d'équilibrage.

La valeur de prisme peut être déjà intégrée au fichier de surface (x, y, z) et le cas échéant la valeur reçue à l'étape 101 est nulle et l'unité 2 le prend en compte pour la génération du fichier centré.

On observera que le prisme pris en considération peut être aussi bien un prisme d'allègement qu'un prisme de prescription ou une combinaison des deux.

Ensuite, l'unité 2 caractérise la surface 12 de manière à déterminer à l'étape 103 une valeur représentative de la plus grande différence de valeurs géométriques d'altitude Zj sur ladite surface 12, appelée MaxHk, par échantillonnage de cette surface 12.

Dans l'exemple illustré, l'altitude géométrique Zj en un point de la surface 12 s'exprime en millimètres et est déduite du fichier matriciel de valeurs géométriques d'altitude.

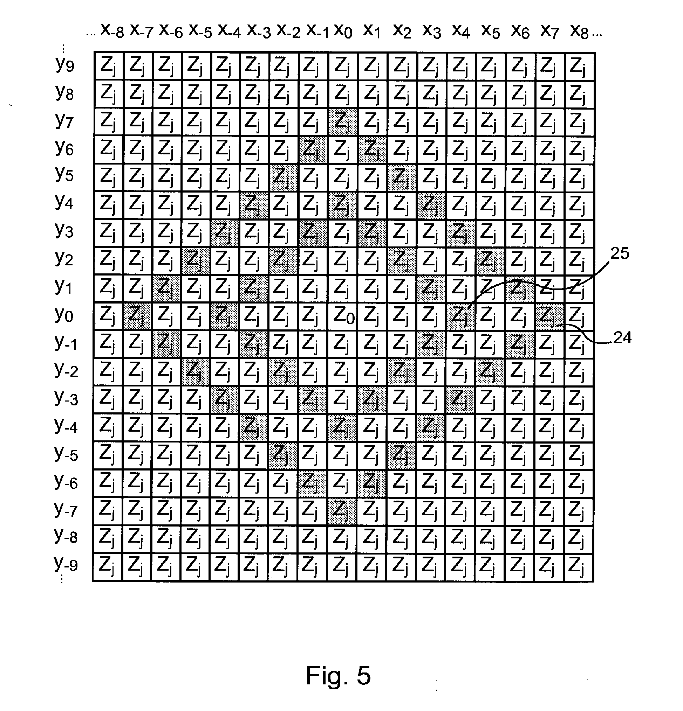

On verra par la suite en référence aux figures 4 et 5 comment on détermine la valeur MaxHk.

L'unité 2 détermine en outre, à l'étape 103, une valeur géométrique de cylindre de la surface 12 en un point de contrôle de la vision de loin sur cette surface 12, appelée Tore VL.

Le cylindre géométrique Cyl en un point de la surface 12 s'exprime en dioptries et est calculé par la relation suivante:

$$Cyl = (n-1) \times \left| \frac{1}{R1} - \frac{1}{R2} \right| ;$$

avec :

- n : une constante égale à 1,53 ;
- R1 : le rayon de courbure maximal de la surface 12 à ce même point ;
- R2 : le rayon de courbure minimal de la surface 12 à ce même point.

Les rayons de courbure maximal et minimal, respectivement R1 et R2, sont calculés de manière connue à partir des coordonnées x, y, z reçues à l'étape 100, dans le repère cartésien, en tout point de la surface 12.

Puis l'unité 2 déduit à l'étape 104 un niveau de difficulté intrinsèque à la surface 12 à partir de la valeur MaxHk de plus grande différence de valeurs géométriques d'altitude Zj sur la surface 12 et de la valeur géométrique de cylindre Tore VL de ladite surface 12.

Ce niveau de difficulté intrinsèque à la surface 12 est sélectionné dans une table de correspondance 30, visible sous la forme d'un graphique à la figure 2 et sous la forme d'une matrice à la figure 3, construite préalablement et mémorisée dans l'unité 2.

Cette table de correspondance 30 contient une pluralité de valeurs de niveau de difficulté intrinsèque associée à différentes plages prédéterminées de valeurs $v_0$ à $v_3$ de MaxHk et $u_0$ à $u_3$ de Tore VL.

Les valeurs $v_0$ à $v_3$ de MaxHk et $u_0$ à $u_3$ de Tore VL sont exprimées respectivement en millimètres et en dioptries et correspondent respectivement aux ordonnées et aux abscisses de ladite table de correspondance 30.

On distingue trois niveaux de difficulté respectivement référencés de A à C et représentatifs d'un niveau de difficulté de plus en plus élevé.

La table de correspondance 30 comporte des seuils de niveaux de difficultés A à C représentés par des droites ayant une pente négative, chacune de ces droites correspondant à la limite entre deux niveaux de difficulté successifs.

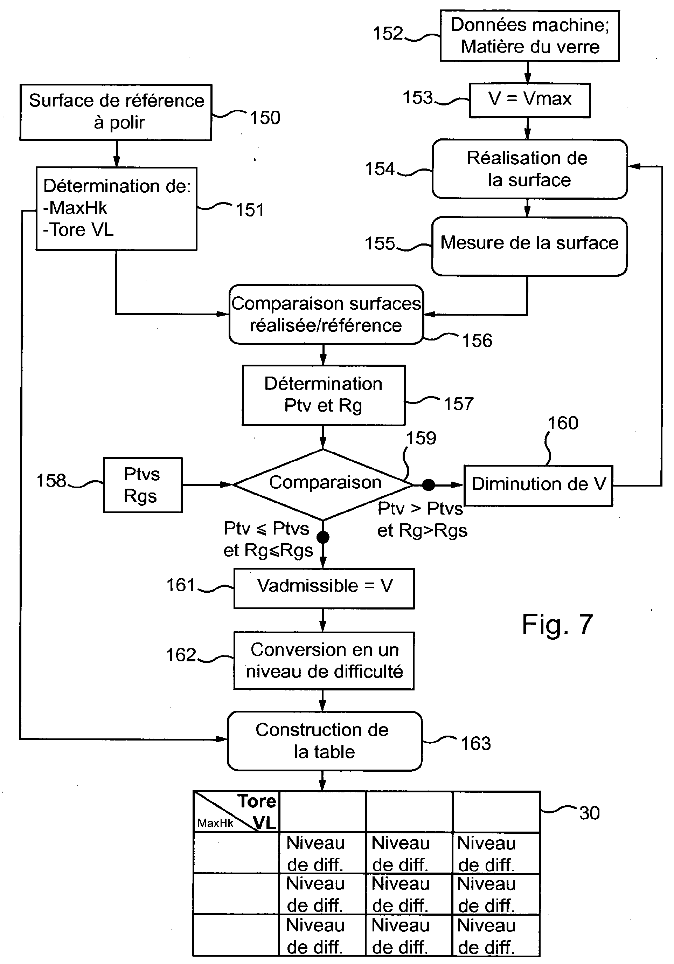

On verra par la suite en référence à la figure 7 comment est construite cette table de correspondance 30.

L'unité 2 obtient, aux étapes 105 et 106, respectivement des paramètres propres à la machine utilisée 1 ainsi que la matière dans laquelle est fait le verre 10.

L'unité 2 détermine ensuite à l'étape 107 les paramètres de polissage suivants à partir du niveau de difficulté A-C, du générateur de la machine 1 et de la matière du verre 10 :

- la vitesse de rotation du verre Vrot ;
- la vitesse de balayage Vbalay ;
- le nombre de balayage Nbalay ; et
- l'amplitude de balayage Abalay.

Ces paramètres cumulés sont représentatifs du temps de polissage, lequel est déterminant pour la productivité.

L'unité 2 obtient donc à cette étape 107, de manière simple et rapide, les paramètres de polissage ci-dessus Vrot, Vbalay, Nbalay et Abalay nécessaires au polissage de la surface 12 pour obtenir le verre progressif 10.

Ainsi, le procédé de polissage peut se poursuivre et la machine 1 peut réaliser très précisément ladite surface 12.

La figure 4 montre comment l'unité 2 choisit de traiter seulement une partie utile de la surface 12 dont on sait qu'elle contient le plus grand gradient d'altitude géométrique. Par partie utile de la surface 12, on entend une zone, par exemple présentant un diamètre inférieur ou égal à 50mm, centrée sur le point de référence prédéterminé de la surface où il est important d'effectuer un bon surfaçage car c'est là que se regroupent les caractéristiques géométriques essentielles de la surface désirée. On considère en effet que les bords du verre 10, qui présentent généralement les plus grands gradients d'altitudes, ne sont pas représentatifs de la difficulté du surfaçage.

Cette partie de surface 12 comporte deux cercles 20 et 21 concentriques centrés sur un point de référence prisme PRP de la surface 12 correspondant au centre de rotation du verre 10 de lunettes par rapport à un repère de polissage de la machine 1. Ce repère est ici représentatif de l'axe de rotation de la broche qui porte le verre. Ce repère ne correspond pas toujours au centre géométrique du verre 10.

Ces deux cercles concentriques 20 et 21 sont situés entre la périphérie et le centre de rotation du verre de lunettes 10.

La partie utile de surface 12 du verre présente un contour externe qui suit un contour dit monture (non représenté) du verre 10, lequel contour monture correspond au contour du verre 10 obtenu après une opération de détourage pour la mise en forme du verre 10 avec la monture de lunettes. Ici, la monture de lunette est circulaire et donc le contour monture du verre 10 est également circulaire.

Sur ces cercles 20 et 21 sont représentés des points 24 et 25 sur lesquels l'unité 2 va travailler.

Par exemple, le cercle 20 a un diamètre de 32mm et 120 points sont disposés sur ce cercle 20 pour satisfaire à un pas d'échantillonnage de 3°.

Le cercle 21, quant à lui, a un diamètre de 36mm et 120 points sont disposés sur ce cercle 21 pour satisfaire au même pas d'échantillonnage.

En pratique, comme on le verra ci-après plus en détail, il s'agit d'un calcul de différences d'altitudes pour une série de couples comportant chacun deux points 24 ou 25 qui sont diamétralement opposés sur le cercle 20 ou 21 sur la surface 12, la diagonale passant bien entendu par le PRP ; de sorte qu'en réalité, l'échantillonnage par couple de points ne se fait que tous les 3° sur 180°, ce qui suffit pour couvrir l'ensemble du cercle 20 ou 21.

Les points d'un couple de points sont équidistants du PRP.

Sur les figures 4 et 5, seulement un certain nombre de ces 240 points sont représentés pour des questions de lisibilité.

Les points 24 et 25 représentent des valeurs géométriques d'altitude Zj qui sont partiellement illustrées sur la figure 5, sous la forme d'un fichier matriciel.

Le centre du fichier correspond à l'intersection entre l'axe de la broche portant le verre 10 et la surface 12 du verre 10, l'axe passant par le point PRP.

Ce centre de fichier représente la référence pour l'échantillonnage et les calculs qui vont permettre de déterminer la vitesse de rotation du verre, soit x=0, y=0 et z=0 (notés respectivement $x_0$, $y_0$ et $z_0$).

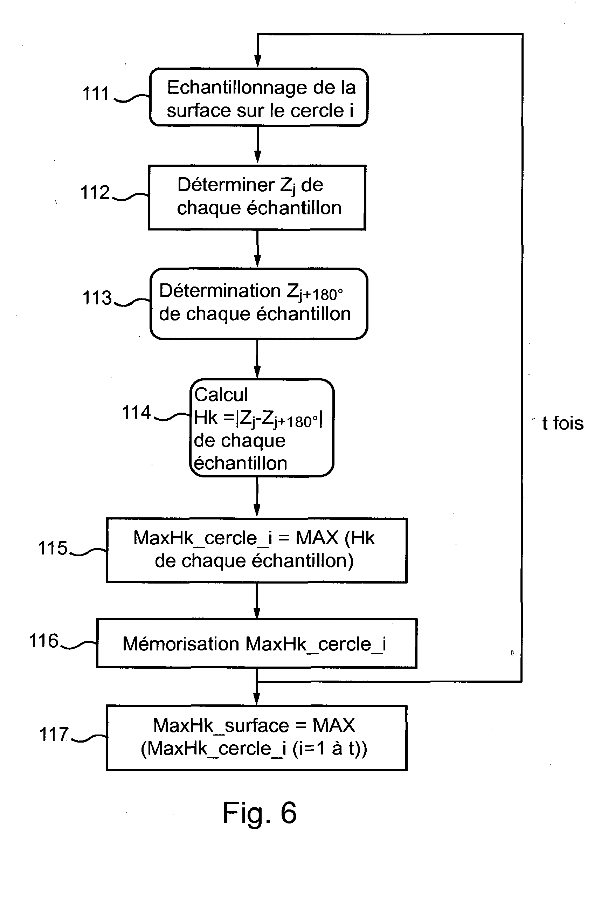

La figure 6 est un schéma-blocs des étapes permettant la détermination de la valeur de MaxHk sur la surface 12, pour un nombre t de cercles sur la surface 12, ici t=2.

Pour déterminer la valeur de MaxHk sur la surface 12, l'unité 2 mesure des différences de valeurs géométriques d'altitude sur chacun des cercles 20 et 21.

Pour cela, l'unité 2 caractérise à l'étape 111 la surface 12 par le biais d'un premier cercle 20, comme vu précédemment, de manière à obtenir une série de points 24.

Chacun des points 24 qui sont répartis sur 180° avec un pas de 3° est caractérisé par son altitude Zj (appelée aussi première valeur géométrique d'altitude) par rapport au centre PRP, laquelle valeur géométrique d'altitude Zj est déterminée pour chaque point à l'étape 112.

L'unité 2 recherche sur le cercle 20, à l'étape 113, tous les points 24 diamétralement opposés aux points 24 dont la valeur géométrique d'altitude Zj a été déterminée à l'étape 112, c'est-à-dire qui sont espacés deux à deux d'un angle de 180° ; et détermine à cette même étape 113 la valeur géométrique d'altitude Zj+180° (appelée aussi deuxième valeur géométrique d'altitude) de tous ces points 24 qui sont diamétralement opposés.

Les points 24 qui sont diamétralement opposés forment des couples de points caractérisés par les valeurs géométriques d'altitude respectives Zj et Zj+180°.

L'unité 2 compare ensuite à l'étape 114 les valeurs géométriques d'altitude Zj et Zj+180° pour chaque couple de points 24 et détermine par conséquent à cette même étape, à partir de la comparaison, la valeur de la différence Hk des valeurs géométriques d'altitude des points 24 sur le cercle 20.

Puis, à l'étape 115, l'unité 2 compare toutes les valeurs Hk pour le cercle 20 et détermine la plus grande valeur MaxHk_cercle_1 desdites valeurs Hk.

Cette valeur MaxHk_cercle_1, représentative de la plus grande différence de valeurs géométriques d'altitude sur le cercle 20 (dit cercle N°1), est mémorisée à l'étape 116, par exemple dans la mémoire 5 du système de traitement de données de l'unité 2.

Ensuite, les mêmes étapes 111 à 116 sont exécutées pour le cercle 21 (dit cercle N°2) de manière à obtenir une valeur MaxHk_cercle_2, représentative de la plus grande différence de valeurs géométriques d'altitude sur le cercle 21.

Bien entendu, ces étapes sont répétées t fois.

Enfin, à l'étape 117, l'unité 2 compare les valeurs MaxHk_cercle_1 et MaxHk_cercle_2 et détermine la plus grande valeur MaxHk_surface sur la surface 12, laquelle valeur MaxHk_surface est représentative de la plus grande différence des valeurs géométriques d'altitude sur la surface (utile) 12 du verre 10 à polir.

Cette valeur MaxHk_surface sur la figure 6 correspond à la valeur MaxHk sur les figures 3 et 7.

La figure 7 est un schéma-blocs des étapes permettant la construction de la table de correspondance de niveaux de difficulté 30, mémorisée dans la mémoire 4 du système de traitement de données de l'unité 2.

Cette table de correspondance peut être construite directement par l'unité 2 ou préalablement par un autre système de traitement de données et chargée dans la mémoire 4 du système de l'unité 2.

Pour construire la table de correspondance de niveaux de difficulté 30, on choisit, à une étape 150, une surface de référence à polir et on en obtient un fichier de coordonnées x, y, z dans un repère cartésien à partir duquel on génère un fichier centré qui prend en compte la valeur de prisme, tel que précédemment aux étapes 100 à 102.

Cette surface de référence présente en outre un état de surface prédéterminé, c'est-à-dire une rugosité prédéterminée.

Les coordonnées de la surface 12 permettent d'en déterminer, à l'étape 151, comme vu précédemment à l'étape 103 du procédé, des valeurs géométriques du plus grand gradient d'altitude MaxHk et de cylindre au point de contrôle de la vision de loin Tore VL.

A une étape 152, on obtient des paramètres propres d'une machine de polissage ainsi que des données sur la matière utilisée pour le verre de lunettes 10.

Puis, à l'étape 153, on choisit comme vitesse initiale de rotation du verre pour polir la surface, la vitesse maximale dans la gamme de vitesse de la machine, laquelle gamme est choisie en fonction de la matière du verre.

A l'étape 154, la machine polit la surface de référence choisie.

Ensuite, on mesure la surface polie à l'étape 155 en obtenant des coordonnées en tout point de cette surface et sa rugosité.

Puis on procède, à l'étape 156, à la comparaison entre les coordonnées de la surface de référence choisie et les coordonnées de la surface réalisée ainsi qu'à la comparaison entre la rugosité obtenue et la rugosité voulue, comparaisons à partir desquelles on déduit une surface dite résiduelle.

Cette surface résiduelle est générée par des erreurs de forme de la machine de polissage 1 lorsqu'elle polit la surface 12 du verre progressif 10 de lunettes.

On détermine ainsi à l'étape 157 une valeur d'un écart Ptv, appelé « peak to valley » en anglais, représentatif des variations d'altitudes de la surface résiduelle ainsi qu'une valeur d'écart Rg de l'écart de rugosité de cette surface résiduelle.

On compare ensuite à une étape 159 les valeurs des écarts Ptv et Rg déterminées à des valeurs seuils d'écarts respectifs Ptvs et Rgs obtenues à une étape 158.

Si les comparaisons résultent en des valeurs Ptv et Rg supérieures aux valeurs respectives Ptvs et Rgs, cela signifié que la vitesse choisie ne fait pas partie de la plage admissible de vitesses et qu'il faut donc diminuer la vitesse de rotation du verre à une étape 160. Le cas échéant, il est nécessaire de polir une nouvelle surface 12 de verre 10, la mesurer puis la comparer (étapes 154 à 159).

Si les comparaisons résultent en des valeurs Ptv et Rg inférieures ou égales aux valeurs respectives Ptvs et Rgs, cela signifie que la vitesse choisie fait partie de la plage admissible de vitesses et on en déduit la vitesse de rotation maximale admissible du verre à une étape 161.

On convertit ensuite à l'étape 162 la vitesse maximale déduite en un niveau de difficulté, allant de A à C.

La valeur de Ptvs correspond au seuil de passage d'un niveau de difficulté à un autre.

Autrement dit, cette valeur de Ptvs correspond aux droites de pentes égales et négatives, dites iso Ptv, vues précédemment à la figure 2.

On peut ainsi construire et compléter la table de correspondance 30 à une étape 163 en áttribuant un niveau de difficulté au couple formé par la valeur de Max-Hk (déterminée en prenant en compte la valeur de prisme) et la valeur de Tore VL, jusqu'à obtenir une table de correspondance complète 30.

La figure 8 illustre une interface de communication client-serveur 7 comportant un côté dit fournisseur 9a et un autre côté dit client 9b, ces deux côtés communicant via une interface internet 8.

Le côté fournisseur comporte un serveur 9a relié à une unité de commande et de contrôle 2a du même type que celle de la figure 1, mais cette fois-ci non intégrée à une machine de polissage, ce serveur 9a étant configuré pour communiquer avec l'interface internet 8.

Le côté client 9b est configuré pour communiquer avec l'interface internet 8, et est relié à une unité de contrôle et de commande 2b du même type que celle du côté fournisseur.

En outre, l'unité 2b côté client est reliée à une machine de polissage 1 b du même type que celle de la figure 1 pour polir une surface 12b d'un verre progressif de lunettes 10b.

L'unité 2b est configurée pour recevoir, côté client, un fichier de coordonnées caractéristiques de la géométrie de la surface 12b à réaliser, des données caractéristiques de paramètres propres à la machine de polissage 1 b utilisée, ainsi que des données caractéristiques de la matière du verre 10b utilisée.

Cette unité 2b envoie par l'intermédiaire de l'interface internet 8 et du serveur 9a ces données à l'unité 2a côté fournisseur pour la détermination de la vitesse de rotation, de la vitesse de balayage et du nombre de balayages.

Cette unité 2a exécute via son système de traitement de données le programme d'ordinateur qu'il contient pour mettre en oeuvre le procédé de polissage et ainsi déduire les paramètres de polissage que sont la vitesse de rotation, la vitesse de balayage, le nombre de balayages et l'amplitude de balayage pour polir la surface 12b du verre 10b.

L'unité 2a envoie, par l'intermédiaire du serveur 9a et de l'interface internet 8 ces paramètres de polissage déterminés à l'unité de commande et de contrôle 2b côté client.

Cette unité 2b est configurée pour exécuter un logiciel pour la mise en oeuvre d'un procédé de polissage du verre 10b, en utilisant les paramètres reçus, afin de réaliser la surface optique complexe 12b sur le verre 10b.

Dans des variantes non illustrées :

- il ne s'agit pas d'un procédé de polissage, mais plutôt d'un procédé d'usinage par tournage, en particulier d'ébauchage ou de finition et, le cas échéant, les paramètres à déterminer supplémentaires à la vitesse de rotation ne sont pas la vitesse de balayage, le nombre de balayages et l'amplitude de balayage, mais plutôt la vitesse d'avance et la profondeur de passe ;

- le nombre de cercles permettant d'échantillonner la surface 12 du verre 10 est différent de t=2, mais la valeur de t peut être bien plus élevée, par exemple t=45 avec le cercle dont le diamètre minimum correspond à 1 mm, le cercle dont le diamètre maximum correspond à 90mm et le pas entre chaque cercle et de 2mm ;

- la partie utile de surface du verre présente un contour externe qui suit un contour monture dudit verre, lequel contour monture correspond au contour dudit verre obtenu après une opération de détourage et ce contour monture est différent d'un contour de forme circulaire, il est par exemple de forme rectangulaire ou ovale ou il présente bien d'autres formes ;

- la table de niveau de difficulté ne présente pas 3 niveaux de difficultés, mais cette table présente moins ou plus de niveaux de difficultés, par exemple 2 à 10 ; cela dépend par exemple de la précision du fichier de surface et par conséquent du fichier centré généré et/ou du type de procédé de surfaçage car l'ébauchage nécessite généralement plus de niveaux de difficulté que le polissage ;

- l'échantillonnage de la surface 12 ne se fait pas directement avec des points sur cette dernière, mais plutôt par des successions de pastilles circulaires et tangentes entre elles qui ont un diamètre par exemple de l'ordre de 2mm à 8mm pour satisfaire à un pas d'échantillonnage par exemple de l'ordre de 5° à 20° et qui correspondent à un nuage de points individuels présentant des coordonnées, desquelles on déduit notamment, par des méthodes bien connues basées par exemple sur les polynômes de Zernike, des valeurs géométriques d'altitudes moyennes ;

- l'unité de commande et de contrôle ne comporte pas de microprocesseur, mais plutôt un microcontrôleur ;

- la machine de surfaçage peut ne pas travailler avec un verre tournant à la vitesse de seuil maximal déterminée, mais plutôt la vitesse peut être variable durant le cycle, c'est-à-dire que la machine peut travailler certaines zones du verre en abaissant la vitesse de rotation de ce dernier ;

- la valeur de cylindre, en particulier les valeurs R1 et R2 ne sont pas obtenues à partir des coordonnées x, y et z, mais ces valeurs sont plutôt obtenues à partir du cylindre de prescription ;

- l'interface de communication peut permettre la communication via un autre réseau que le réseau internet, par exemple un réseau intranet ou un réseau privé sécurisé ; et/ou
- l'interface de communication 8 peut aussi permettre de transférer l'ensemble du programme d'ordinateur vers le système de traitement de données distant 2b pour la mise en oeuvre du procédé dans la machine de polissage 1 b.

On rappelle plus généralement que l'invention ne se limite pas aux exemples décrits et représentés, mais est définie dans le cadre des revendications annexées.

**Revendications**

1. Procédé de surfaçage d'une surface (12) d'un verre de lunettes (10), comportant une étape de détermination d'une vitesse de rotation (Vrot) fixe dudit verre de lunettes (10) à partir de caractéristiques géométriques de ladite surface (12), **caractérisé en ce que** l'étape de détermination de la vitesse de rotation (Vrot) comporte les étapes suivantes :

   - générer (102) à partir des caractéristiques géométriques de ladite surface (12) un fichier de valeurs géométriques d'altitude (Zj) de ladite surface (12), lequel fichier est centré sur une valeur géométrique d'altitude ($Z_0$) en un point de référence prédéterminé (PRP) ;
   - déterminer (103) une valeur représentative de la plus grande différence (MaxHk) de valeurs géométriques d'altitude (Zj) sur ladite surface (12) ; et
   - déduire (107) la vitesse de rotation (Vrot) de ladite valeur de la plus grande différence (MaxHk) de valeurs géométriques d'altitude (Zj) sur ladite surface (12) et d'une valeur géométrique de cylindre (Tore VL) en un point prédéterminé de contrôle de la vision de loin.

2. Procédé selon la revendication 1, **caractérisé en ce que** l'étape (103) de déterminer la valeur représentative de la plus grande différence (MaxHk) de valeurs géométriques d'altitude (Zj) comporte l'étape de traiter (111-117) les valeurs géométriques d'altitude (Zj) de ladite surface (12) dudit fichier centré en prenant en compte des couples de points individuels (24, 25) de ladite surface (12), lesquels points individuels (24, 25) de chaque couple sont diagonalement opposés sur ladite surface (12), la diagonale passant audit point de référence prédéterminé (PRP), lesdits points individuels (24, 25) étant équidistants dudit point de référence prédéterminé (PRP).

3. Procédé selon l'une des revendications 1 et 2, **caractérisé en ce que** l'étape (103) de déterminer la valeur représentative de la plus grande différence (MaxHk) de valeurs géométriques d'altitude (Zj) comporte l'étape de traiter les valeurs géométriques d'altitude (Zj) de ladite surface (12) dudit fichier centré en prenant en compte seulement une partie utile de la surface (12) du verre (10) dont on sait qu'elle contient le plus grand gradient d'altitude.

4. Procédé selon la revendication 3, **caractérisé en ce que** ladite partie utile de surface (12) est située dans une zone annulaire intermédiaire, entre la périphérie et le centre de la surface (12).

5. Procédé selon l'une des revendications 3 et 4, **caractérisé en ce que** ladite partie utile de surface (12) présente un contour externe qui suit un contour monture dudit verre (10), lequel contour monture correspond au contour dudit verre (10) obtenu après une opération de détourage.

6. Procédé selon l'une quelconque des revendications 1 à 5, **caractérisé en ce que** ledit point de référence prédéterminé est représentatif du point de référence de prisme (PRP).

7. Procédé selon l'une quelconque des revendications 1 à 6, **caractérisé en ce que** l'étape (103) de déterminer la valeur de plus grande différence (MaxHk) de valeurs géométriques d'altitude (Zj) sur la dite surface (12) comporte les étapes suivantes :

   - déterminer (112) des premières valeurs géométriques d'altitude (Zj) sur ladite surface (12) ;
   - déterminer (113) des deuxièmes valeurs géométriques d'altitude (Zj+180°) présentant un décalage angulaire prédéterminé par rapport auxdites premières valeurs géométriques d'altitude (Zj) ;
   - comparer (114-116) lesdites premières valeurs géométriques d'altitude (Zj) auxdites deuxièmes valeurs géométriques d'altitude (Zj+180°) décalées angulairement ; et
   - déterminer (117) la valeur de plus grande différence (MaxHk) des valeurs géométriques d'altitude (Zj) sur la dite surface (12).

8. Procédé selon l'une quelconque des revendications 1 à 7, **caractérisé en ce qu'**il s'agit d'un procédé de polissage de ladite surface (12) dudit verre de lunettes (10).

9. Procédé selon la revendication 8, **caractérisé en ce qu'**il comporte l'une au moins des étapes supplémentaires suivantes :

   - déduire (107) une vitesse de balayage (Vbalay) de la machine de polissage (1) à partir de ladite valeur de la plus grande différence (MaxHk) de valeurs géométriques d'altitude (Zj) sur ladite surface (12), de ladite valeur géométrique de cylindre (Tore VL) et de la matière dudit verre de lunettes (10) ;
- déduire (107) un nombre de balayages (Nbalay) de l'outil de balayage de la machine de polissage (1) à partir de ladite valeur de la plus grande différence (MaxHk) de valeurs géométriques d'altitude (Zj) sur ladite surface (12), de ladite valeur géométrique de cylindre (Tore VL) et de la matière dudit verre (10) de lunettes ; et
- déduire (107) une amplitude de balayage (Abalay) de l'outil de balayage de la machine de polissage (1) à partir de ladite valeur de la plus grande différence (MaxHk) de valeurs géométriques d'altitude (Zj) sur ladite surface (12), de ladite valeur géométrique de cylindre (Tore VL) et de la matière dudit verre de lunettes (10).

**10.** Procédé selon l'une quelconque des revendications 1 à 9, **caractérisé en ce que** l'étape de déterminer la vitesse de rotation du verre (Vrot) comporte les étapes suivantes :

- déduire (104) un niveau de difficulté (A-C) intrinsèque à ladite surface (12) à partir de la valeur de la plus grande différence (MaxHk) de valeurs géométriques d'altitude (Zj) et de la valeur géométrique de cylindre (Tore VL) ; et
- sélectionner (107) la vitesse de rotation du verre (Vrot) à partir dudit niveau de difficulté (A-C) et de paramètres propres à la machine de surfaçage utilisée.

**11.** Procédé selon la revendication 10, **caractérisé en ce que** ledit niveau de difficulté (A-C) intrinsèque à la surface (12) est choisi parmi plusieurs niveaux de difficulté intrinsèque (A-C) prédéterminés en fonction de plages prédéterminées de valeurs géométriques de cylindre (Tore VL) et de plages prédéterminées de valeurs de plus grande différence (MaxHk) de valeurs géométriques d'altitude (Zj).

**12.** Unité de contrôle et de commande pourvue d'un microprocesseur (3) configuré pour exécuter un programme d'ordinateur pour mettre en oeuvre le procédé selon l'une quelconque des revendications 1 à 11.

**13.** Machine de surfaçage pour réaliser une surface (12) d'un verre de lunettes (10) comportant une unité de contrôle et de commande selon la revendication 12.

**14.** Interface de communication client-serveur comportant des moyens (9a, 9b) configurés pour transférer la vitesse de rotation du verre déterminée par un programme d'ordinateur pour mettre en oeuvre le procédé selon l'une quelconque des revendications 1 à 11, lorsque ce programme d'ordinateur est exécuté dans une unité de contrôlé et de commande (2).

**Patentansprüche**

**1.** Verfahren zur Oberflächenbearbeitung einer Fläche (12) eines Brillenglases (10), das einen Schritt der Bestimmung einer festgelegten Drehgeschwindigkeit (Vrot) des Brillenglases (10) ausgehend von geometrischen Merkmalen der Fläche (12) aufweist, **dadurch gekennzeichnet, dass** der Schritt der Bestimmung der Drehgeschwindigkeit (Vrot) die folgenden Schritte aufweist:

- Generieren (102), ausgehend von den geometrischen Merkmalen der Fläche (12), einer Datei geometrischer Höhenwerte (Zj) der Fläche (12), wobei die Datei auf einen geometrischen Höhenwert ($Z_0$) an einem vorbestimmten Bezugspunkt (PRP) zentriert ist;
- Bestimmen (103) eines für die größte Differenz (MaxHk) geometrischer Höhenwerte (Zj) auf der Fläche (12) repräsentativen Werts; und
- Ableiten (107) der Drehgeschwindigkeit (Vrot) vom Wert der größten Differenz (MaxHk) geometrischer Höhenwerte (Zj) auf der Fläche (12) und von einem geometrischen Zylinderwert (Tore VL) an einem vorbestimmten Kontrollpunkt der Weitsicht.

**2.** Verfahren nach Anspruch 1, **dadurch gekennzeichnet, dass** der Schritt (103) der Bestimmung des für die größte Differenz (MaxHk) geometrischer Höhenwerte (Zj) repräsentativen Werts den Schritt der Verarbeitung (111-117) der geometrischen Höhenwerte (Zj) der Fläche (12) der zentrierten Datei aufweist, indem Paare von einzelnen Punkten (24, 25) der Fläche (12) berücksichtigt werden, wobei die einzelnen Punkte (24, 25) jedes Paars auf der Fläche (12) diagonal entgegengesetzt liegen, wobei die Diagonale zum vorbestimmten Bezugspunkt (PRP) geht, wobei die einzelnen Punkte (24, 25) den gleichen Abstand zum vorbestimmten Bezugspunkt (PRP) haben.

**3.** Verfahren nach einem der Ansprüche 1 und 2, **dadurch gekennzeichnet, dass** der Schritt (103) der Bestimmung des für die größte Differenz (MaxHk) geometrischer Höhenwerte (Zj) repräsentativen Werts den Schritt der Verarbeitung der geometrischen Höhenwerte (Zj) der Fläche (12) der zentrierten Datei aufweist, indem nur ein Nutzbereich der Fläche (12) des Glases (10) berücksichtigt wird, von dem bekannt ist, dass er den größten Höhengradienten enthält.

**4.** Verfahren nach Anspruch 3, **dadurch gekennzeichnet, dass** der Nutzflächenbereich (12) sich in einer ringförmigen Zwischenzone zwischen der Peripherie und der Mitte der Fläche (12) befindet.

**5.** Verfahren nach einem der Ansprüche 3 und 4, **dadurch gekennzeichnet, dass** der Nutzflächenbereich (12) eine Außenkontur hat, die einer Fassungskontur des Glases (10) folgt, wobei die Fassungskontur der Kontur des Glases (10) entspricht, die nach einem Vorgang des Randschleifens erhalten wird.

**6.** Verfahren nach einem der Ansprüche 1 bis 5, **dadurch gekennzeichnet, dass** der vorbestimmte Bezugspunkt für den Prismenbezugspunkt (PRP) repräsentativ ist.

**7.** Verfahren nach einem der Ansprüche 1 bis 6, **dadurch gekennzeichnet, dass** der Schritt (103) der Bestimmung des Werts größter Differenz (MaxHk) geometrischer Höhenwerte (Zj) auf der Fläche (12) die folgenden Schritte aufweist:

- Bestimmen (112) erster geometrische Höhenwerte (Zj) auf der Fläche (12);
- Bestimmen (113) zweiter geometrischer Höhenwerte (Zj+180°), die einen vorbestimmten Winkelversatz bezüglich der ersten geometrischen Höhenwerte (Zj) aufweisen;
- Vergleich (114-116) der ersten geometrischen Höhenwerte (Zj) mit den winkelversetzten zweiten geometrischen Höhenwerten (Zj+180°); und
- Bestimmen (117) des Werts größter Differenz (MaxHk) der geometrischen Höhenwerte (Zj) auf der Fläche (12).

**8.** Verfahren nach einem der Ansprüche 1 bis 7, **dadurch gekennzeichnet, dass** es sich um ein Verfahren des Polierens der Fläche (12) des Brillenglases (10) handelt.

**9.** Verfahren nach Anspruch 8, **dadurch gekennzeichnet, dass** es mindestens einen der folgenden zusätzlichen Schritte aufweist:

- Ableiten (107) einer Abtastgeschwindigkeit (Vbalay) der Poliermaschine (1) ausgehend vom Wert der größten Differenz (MaxHk) geometrischer Höhenwerte (Zj) auf der Fläche (12), vom geometrischen Zylinderwert (Tore VL) und vom Material des Brillenglases (10);
- Ableiten (107) einer Anzahl von Abtastvorgängen (Nbalay) des Abtastwerkzeugs der Poliermaschine (1) ausgehend vom Wert der größten Differenz (MaxHk) geometrischer Höhenwerte (Zj) auf der Fläche (12), vom geometrischen Zylinderwert (Tore VL) und vom Material des Brillenglases (10); und
- Ableiten (107) einer Abtastamplitude (Abalay) des Abtastwerkzeugs der Poliermaschine (1) ausgehend vom Wert der größten Differenz (MaxHk) geometrischer Höhenwerte (Zj) auf der Fläche (12), vom geometrischen Zylinderwert (Tore VL) und vom Material des Brillenglases (10).

**10.** Verfahren nach einem der Ansprüche 1 bis 9, **dadurch gekennzeichnet, dass** der Schritt der Bestimmung der Drehgeschwindigkeit des Glases (Vrot) die folgenden Schritte aufweist:

- Ableiten (104) eines der Fläche (12) inhärenten Schwierigkeitsgrads (A-C) ausgehend vom Wert der größten Differenz (MaxHk) geometrischer Höhenwerte (Zj) und vom geometrischen Zylinderwert (Tore VL); und
- Auswahl (107) der Drehgeschwindigkeit des Glases (Vrot) ausgehend vom Schwierigkeitsgrad (A-C) und von der verwendeten Oberflächenbearbeitungsmaschine eigenen Parametern.

**11.** Verfahren nach Anspruch 10, **dadurch gekennzeichnet, dass** der der Fläche (12) inhärente Schwierigkeitsgrad (A-C) unter mehreren vorbestimmten inhärenten Schwierigkeitsgraden (A-C) abhängig von vorbestimmten Bereichen geometrischer Zylinderwerte (Tore VL) und von vorbestimmten Bereichen von Werten größter Differenz (MaxHk) geometrischer Höhenwerte (Zj) ausgewählt wird.

**12.** Kontroll- und Steuereinheit, die mit einem Mikroprozessor (3) versehen ist, der konfiguriert ist, ein Computerprogramm auszuführen, um das Verfahren nach einem der Ansprüche 1 bis 11 durchzuführen.

**13.** Oberflächenbearbeitungsmaschine zur Herstellung einer Fläche (12) eines Brillenglases (10), die eine Kontroll- und Steuereinheit nach Anspruch 12 aufweist.

**14.** Client-Server-Kommunikationsschnittstelle, die Einrichtungen (9a, 9b) aufweist, welche konfiguriert sind, die von einem Computerprogramm bestimmte Drehgeschwindigkeit des Glases zu übertragen, um das Verfahren nach einem der Ansprüche 1 bis 11 durchzuführen, wenn dieses Computerprogramm in einer Kontroll- und Steuereinheit (2) ausgeführt wird.

**Claims**

**1.** Process for surfacing a surface (12) of a spectacle glass (10), comprising a step of determining a fixed rotation speed (Vrot) of said spectacle glass (10) from geometric characteristics of said surface (12), **characterized in that** the step of determining the rotation speed (Vrot) comprises the following steps:

- generating (102), from geometric characteristics of said surface (12), a file of altitude geometric values (Zj) of said surface (12), which file is centered on an altitude geometric value ($Z_0$) at a preset reference point (PRP);
- determining (103) a value representing the largest difference (MaxHk) between altitude geometric values (Zj) on said surface (12); and
- deducing (107) the rotation speed (Vrot) from said value of the largest difference (MaxHk) between altitude geometric values (Zj) on said surface (12), and from a cylinder geometric value (Tore VL) at a preset far-vision checking point.

2. Process according to Claim 1, **characterized in that** the step (103) of determining the value representing the largest difference (MaxHk) between altitude geometric values (Zj) comprises a step of processing (111-117) the altitude geometric values (Zj) of said surface (12) in said centered file by taking into account pairs of individual points (24, 25) on said surface (12), which individual points (24, 25) of each pair are diagonally opposite on said surface (12), the diagonal passing through said preset reference point (PRP), said individual points (24, 25) being equidistant from said preset reference point (PRP).

3. Process according to either of Claims 1 and 2, **characterized in that** the step (103) of determining the value representing the largest difference (MaxHK) between altitude geometric values (Zj) comprises a step of processing the altitude geometric values (Zj) of said surface (12) in said centered file, only a useful portion of the surface (12) of the glass (10) being taken into account, it being known that said useful portion contains the largest altitude gradient.

4. Process according to Claim 3, **characterized in that** said useful portion of the surface (12) is located in an intermediate annular zone between the periphery and center of the surface (12).

5. Process according to either of Claims 3 and 4, **characterized in that** said useful portion of the surface (12) has an external outline that follows a frame outline of said glass (10), which frame outline corresponds to the outline of said glass (10) obtained after a trimming operation.

6. Process according to any one of Claims 1 to 5, **characterized in that** said preset preference point is representative of the prism reference point (PRP).

7. Process according to any one of Claims 1 to 6, **characterized in that** the step (103) of determining the value of the largest difference (MaxHK) between altitude geometric values (Zj) on said surface (12) comprises the following steps:

- determining (112) first altitude geometric values (Zj) on said surface (12);
- determining (113) second altitude geometric values (Zj+180°) having a preset angular offset with respect to said first altitude geometric values (Zj);
- comparing (114-116) said first altitude geometric values (Zj) with said angularly offset second altitude geometric values (Zj+180°); and
- determining (117) the value of the largest difference (MaxHk) between altitude geometric values (Zj) on said surface (12).

8. Process according to any one of Claims 1 to 7, **characterized in that** it is a process for polishing said surface (12) of said spectacle glass (10).

9. Process according to Claim 8, **characterized in that** it comprises at least one of the following additional steps:

- deducing (107) a scan speed (Vbalay) of the polishing machine (1) from said value of the largest difference (MaxHk) between altitude geometric values (Zj) on said surface (12), from said cylinder geometric value (Tore VL) and from the material of said spectacle glass (10);
- deducing (107) a number (Nbalay) of scans of the scanning tool of the polishing machine (1) from said value of the largest difference (MaxHk) between altitude geometric values (Zj) on said surface (12), from said cylinder geometric value (Tore VL) and from the material of said spectacle glass (10); and
- deducing (107) a scanning amplitude (Abalay) for the scanning tool of the polishing machine (1) from said value of the largest difference (MaxHk) between altitude geometric values (Zj) on said surface (12), from said cylinder geometric value (Tore VL) and from the material of said spectacle glass (10).

10. Process according to any one of Claims 1 to 9, **characterized in that** the step of determining the rotation speed (Vrot) of the glass comprises the following steps:

- deducing (104) a difficulty level (A-C) intrinsic to said surface (12) from the value of the largest difference (MaxHk) between altitude geometric values (Zj) and from the cylinder geometric value (Tore VL) ; and

- selecting (107) the rotation speed of the glass (Vrot) based on said difficulty level (A-C) and on parameters specific to the surfacing machine used.

11. Process according to Claim 10, **characterized in that** said difficulty level (A-C) intrinsic to the surface (12) is chosen from a plurality of intrinsic difficulty levels (A-C) preset as a function of preset ranges of cylinder geometric values (Tore VL) and of preset ranges of values of the largest difference (MaxHk) between altitude geometric values (Zj).

12. Control-command unit provided with a microprocessor (3) configured to execute a computer program for implementing the process according to any one of Claims 1 to 11.

13. Surfacing machine for producing a surface (12) of a spectacle glass (10) comprising a control-command unit according to Claim 12.

14. Client-server communication interface comprising means (9a, 9b) configured to transfer the rotation speed of the glass, which speed is determined by a computer program, in order to implement the process according to any one of Claims 1 to 11, when this computer program is executed in a control-command unit (2).

Fig. 1

Fig. 2

MaxHk (mm)

Tore VL (D)

Fig. 3

PRP

25 24

10

12

21

20

Fig. 4

2b

μP

9a          8          9b

Serveur    Interface    Client
           internet

μP

RAM                              RAM

2a          7

Fig. 8

12b

1b

10b

Fig. 5

111 — Echantillonnage de la surface sur le cercle i

112 — Déterminer $Z_j$ de chaque échantillon

113 — Détermination $Z_{j+180°}$ de chaque échantillon

114 — Calcul $Hk = |Z_j - Z_{j+180°}|$ de chaque échantillon

115 — MaxHk_cercle_i = MAX (Hk de chaque échantillon)

116 — Mémorisation MaxHk_cercle_i

t fois

117 — MaxHk_surface = MAX (MaxHk_cercle_i (i=1 à t))

Fig. 6

152 — Données machine;
Matière du verre

150 — Surface de référence
à polir

153 — V = Vmax

151 — Détermination de:
-MaxHk
-Tore VL

154 — Réalisation de
la surface

155 — Mesure de la surface

Comparaison surfaces
réalisée/référence
156

Détermination
Ptv et Rg
157

159

158 — Ptvs
Rgs

Comparaison

160

Diminution de V

Ptv > Ptvs
et Rg>Rgs

Ptv ≤ Ptvs
et Rg≤Rgs

161 — Vadmissible = V

Fig. 7

162 — Conversion en un
niveau de difficulté

Construction de
la table
163

| MaxHk \ Tore VL | | | |
|---|---|---|---|
| | Niveau de diff. | Niveau de diff. | Niveau de diff. |
| | Niveau de diff. | Niveau de diff. | Niveau de diff. |
| | Niveau de diff. | Niveau de diff. | Niveau de diff. |

30

**RÉFÉRENCES CITÉES DANS LA DESCRIPTION**

**Documents brevets cités dans la description**

- WO 2011083234 A